# EUROPEAN PATENT APPLICATION

(11) **EP 3 838 032 A1**
(43) Date of publication of application: **23.06.2021**
(21) Application number: 19218601.3
(22) Date of filing: 20.12.2019
(51) Int. Cl.: A24F 40/65, H04M 1/725, H04W 4/80

(54) **SMOKING SUBSTITUTE DEVICE AND METHOD OF COMMUNICATING**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

The present invention relates to a smoking substitute device and particularly, although not exclusively, to a smoking substitute device, system and method of communicating. When operating a smoking substitute device in conjunction with a mobile device, a transmission of data between the smoking substitute device and the mobile device for processing by the mobile device and/or a backend application server must consider the type of data to determine a suitable type of data transmission and must adapt the transmission of data appropriately. Accordingly, there is provided a smoking substitute device (10,110), comprising a wireless interface (134), wherein the wireless interface is adapted to be connectable to a mobile device (2) for communicating with the mobile device; wherein the smoking substitute device is adapted to transmit first data to the mobile device; wherein the smoking substitute device is adapted to transmit second data to the mobile device; wherein the first data comprises encrypted data; and wherein the second data comprises at least one of non-encrypted data and data that is encrypted differently than the first data.

## Description

### TECHNICAL FIELD

The present invention relates to a smoking substitute device and particularly, although not exclusively, to a smoking substitute device, system and method of communicating.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece.

The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco pic. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present inventor(s) have observed that when operating in conjunction with a mobile device, a transmission of data between the smoking substitute device and the mobile device for processing by the mobile device and/or a backend application server may consider the type of data to determine a suitable type of data transmission and may adapt the transmission of data appropriately.

The present invention has been devised in light of the above considerations.

### Summary of the Invention

According to a first aspect of the present invention, there is provided a smoking substitute device, comprising a wireless interface, wherein the wireless interface is adapted to be connectable to a mobile device for communicating with the mobile device; wherein the smoking substitute device is adapted to transmit first data to the mobile device; wherein the smoking substitute device is adapted to transmit second data to the mobile device; wherein the first data comprises encrypted data; and wherein the second data comprises at least one of non-encrypted data, and encrypted data that is encrypted differently than the first data.

According to a second aspect of the present invention, there is provided a smoking substitute system, comprising a smoking substitute device according to at least one of the preceding claims, and a mobile device in communicative connection with the smoking substitute device, and in particular an application server in communicative connection with the mobile device via a network.

According to a third aspect of the present invention, there is provided a method of communicating of a smoking substitute device and a mobile device, wherein the smoking substitute device is adapted to be connectable to the mobile device for communicating with the mobile device, comprising transmitting first data from the smoking substitute device to the mobile device; and transmitting second data to the mobile device, wherein the first data comprises encrypted data; and wherein the second data comprises at least one of non-encrypted data, and data that is encrypted differently to the first data.

Known devices may provide a proprietary functionality to a user. E.g. a smoking substitute device may provide the proprietary functionality of allowing a user of the device to simulate the act of smoking. In case a certain proprietary functionality is limited to the specific application, it is conceivable to connect such a proprietary device to a multi-purpose device, like e.g. a mobile device, in particularly one that is flexibly programmable. By such a connection between a proprietary device and a flexible multi-purpose device, the functionality of the proprietary device may be enhanced, and the combined experience for a user may be likewise enhanced. A flexible multi-purpose device, like a mobile device, may provide the functionality to execute an application, or app, on the mobile device, to provide the enhanced functionality.

A connection between a smoking substitute device and a mobile device requires the transmission of data at least between the smoking substitute device and the mobile device. Possibly, a further application server may be involved in the communication, e.g. as a backend server, for storing user and/or usage data, and for analysing raw data that would otherwise not be possible on either the smoking substitute device or the mobile device, be it that the processing power of either the smoking substitute device or the mobile device is insufficient for timely analysis or simply further data is required for the analysis that is not available to the smoking substitute device or the mobile device.

Different types of data may be analysed, in particular data of a data type that must or should be available in real time, and data of a data type that need not be or may not be available in real time. The reason for the unavailability of non-real time data may e.g. be the above mentioned required computing power or computational complexity, or data availability for analysis. Non-real-time data may also be data where a certain time sequence of data is analysed, and thus historic data is required, which may not be available to the either the smoking substitute device or the mobile device. Such historic data may e.g. be stored on an application server, and for analysis may thus be available exclusively to the application server.

Data from the smoking substitute device may be sent from the smoking substitute device to the application server, in particular via the mobile device, like e.g. a mobile communicating device or smartphone. In other words, the mobile device may relay or forward data received from the smoking substitute device to the application server and vice versa. Thus, there may be a transport layer or communication channel between the smoking substitute device and the application server, via the mobile device. Such a channel may be encrypted, e.g. may be embodied as a virtual private network (VPN) connection, or the data itself may be encrypted.

First data, or encrypted data may in particular be the aforementioned non-real-time data, since for encryption and decryption, the smoking substitute device may require time to perform said encryption/decryption that simply does not allow for real-time processing and transmission. Alternatively, encrypted non-real-time data may deliberately be sent only at specific times or intervals, so to reduce power consumption and or reduce data usage required for the transmission of the data. E.g. such non-real-time data may be sent every couple of hours or on force closure of an app running on the mobile device. As such, the encrypted data may originate from the smoking substitute device, i.e. may be encrypted by the smoking substitute device, or may originate from the mobile device, i.e. may be encrypted by the mobile device.

In particular in case that the smoking substitute device provides encrypted (non-real-time) data and non-encrypted or differently encrypted (real-time) data, the mobile device may forward the encrypted data, substantially unprocessed, to the application server, but may use the non-encrypted/ differently encrypted data locally.

The non-encrypted/ differently encrypted data may be used on the mobile device, e.g. displayed to a user currently using the smoking substitute device. Such data may e.g. be a (current) power supply or battery level, a puff count or a lock status of the smoking substitute device.

The encrypted data sent to the application server may be processed by the application server, and may in particularly be sent back to the mobile device (also encrypted or unencrypted) for display to the user only subsequently. Such data presented may e.g. be a puff count graph (e.g. a weekly view or daily view of the puff count), an nicotine consumption graph (e.g. a yearly, monthly, weekly or daily view of the consummated nicotine), a weekly or monthly pod count of consumables consumed, a (current) liquid level (which may be computed by the application server using such consumption data, like (historical) puff count data and puff duration data), or general purchasing information, like where to find a store, e.g. in the vicinity of the mobile device or another defined area.

Generally, encrypted data may be sent from the smoking substitute device to the mobile device. The mobile phone may then send this data to the application server in the backend. There, the data is decrypted and processed before being sent back to the mobile phone, either encrypted or non-encrypted. To save battery life and reduce data usage, the encrypted data may not be sent in real time, but may be sent every couple of hours or on force closure of the app. However, in order to provide real time data on battery level % and puff count, these data may not be encrypted or may be differently encrypted, and will be sent from the smoking substitute device to the mobile device in real time.

According to a preferred embodiment of the smoking substitute device, the first data may be non-real time data and the second data may be real time data.

Put another way, non-real time data, since it is data that is not or cannot be used in real time may be encrypted, to enhance security and privacy when transporting and storing the data. E.g. the non-real-time data is processed or analysed in a further entity, like an application server, and thus leaves the immediate sphere of influence of the user, e.g. the mobile device, thus the data may be encrypted for these reasons. Likewise, real-time data is or may be used substantially immediately, either because said data is required for the proper functioning of the smoking substitute system and/or the app, or because the data is usable directly, in particular without the requirement for further post-processing.

Such real-time data may thus not be encrypted or may be encrypted in a way that the mobile device is capable of decrypting. E.g. the mobile device may only be adapted to decrypt an encryption scheme that is less complex or less CPU-intensive, i.e. requires lesser computing resources than e.g. the encryption that is decrypted on the application server. Alternatively, since the mobile device is in the sphere of influence of the user, a less complex and potentially less secure encryption may be sufficient to adequately secure the data stored (only) on the mobile device. Contrary hereto, since the application server is out of the sphere of control of the user, a more complex and potentially more secure encryption may be used as a transport encryption for data transmitted to and from the application server, or rather between mobile device and application server.

Considering the communication connection, it may be sufficient to have a transport layer encryption or the like between the smoking substitute device and the mobile device, which may be a less complex encryption than the encryption between the mobile device and the application server, in particular may not have any additional encryption. Thus, e.g. the transport layer or channel may provide the encryption between the smoking substitute device and the mobile device, while the data is additionally encrypted, by the smoking substitute device and/or the mobile device, for transmission to the application server.

In this regard, real time data may be seen as data that is transmitted substantially in real time, i.e. transmitted substantially at the time the data is obtained. Contrary hereto, non-real time data may be seen as data that is transmitted not in real time, i.e. transmitted with a time delay from the time the data is obtained and/or it is transmitted only in defined intervals, e.g. every 5min, 10 min, 15, min 30 min,60 min, 90 min, 120 min, 4h, 8h, 12h, 24h, or transmitted upon a trigger event, e.g. an app closure, a termination of a consumable consumption, a termination of a consumption of x consumables, with x being a number like 2 consumed consumables, 3 consumed consumables, 4 consumed consumables, 5 consumed consumables,10 consumed consumables, 15 consumed consumables,20 consumed consumables,25 consumed consumables, at the end of a day, a defined time elapsed since last consumable consumption, e.g. 5min, 10 min, 15, min 30 min,60 min, 90 min, 120 min, 4h, 8h, 12h, 24h, and the like.

According to a further preferred embodiment of the smoking substitute device, the mobile device may be adapted to be connectable to an application server for communicating with the application server via a network, at least part of the first data may be transmitted to the application server and may be processed by the application server, and in particular at least part of the processed data may be transmitted to the mobile device.

An application server, or a backend server, may provide either dedicated computing power and/or dedicated storage space that may not be available on either the smoking substitute device and/or the mobile device. Such computing power may be required for dedicated processing and analysis of data, and likewise the storage space may be required to make available (historical) usage data required for the processing and analysis of the data. An application server may be a backend server farm, a consumer database system, a consumer management system or the like. Processing of data may at least be a decryption of data, and in particular an analysis of the data. A processing may also comprise a subsequent encryption, to securely store the data on the application server or before transmitting analysed data back to the mobile device.

According to a further preferred embodiment of the smoking substitute device, the smoking substitute device may be adapted to communicate with the application server via the mobile device, in particular may be adapted to directly communicate with the application server via the mobile device.

In other words, the mobile device may act as a relay between the smoking substitute device and the application server, or may provide a bridge functionality to allow a substantially directly connection between the smoking substitute device and the application server. The mobile device may receive encrypted data from the smoking substitute device to forward to the application server or may likewise receive non-encrypted data from the smoking substitute device to encrypt and the forward to the application server.

According to a further preferred embodiment of the smoking substitute device, the first data may be of a first data type; and the second data may be at least partly of a second data type different from the first data type.

According to a further preferred embodiment of the smoking substitute device, the first data and the second data may be a data type of the group consisting of status data, usage data, consumption data, error data, puff count data, nicotine consumption data, pod count data, fill level data of a consumable, power source level data, lock status data, consumable supply data, sensor data, device identification data and user identification data.

The respective data may be data from the smoking substitute device, in particular may be data from the consumable of the smoking substitute device.

According to a further preferred embodiment of the smoking substitute device, at least part of the second data may be processed by the mobile device, in particular may be at least one of status data, usage data, consumption data, error data, puff count data, pod count data, fill level data of a consumable, power source level data and lock status data, further in particular may be power source level data and puff count data.

In other words, data that may be used directly, in particular without the need to be processed or analysed before a proper use, may be sent to the mobile device non-encrypted for immediate use by the mobile device. This sending of non-encrypted data to the mobile device and the subsequent use by the mobile device may not exclude that the same data in sent (additionally) as encrypted data or within the encrypted data to the application server so use in subsequent processing and analysis. In other words, at least a part of the data sent in non-encrypted form to the mobile device may also be sent in encrypted form to the application server.

According to a further preferred embodiment of the smoking substitute device, processing data by the mobile device may comprise decryption of encrypted data by the mobile device, and/or processing data by the application server may comprise decryption of encrypted data by the application server.

According to a further preferred embodiment of the smoking substitute system, the mobile device may be adapted to be connectable to an application server for communicating with the application server via a network, at least part of the first data may be transmitted to the application server and may be processed by the application server; and at least part of the second data may be processed by the mobile device.

According to a further preferred embodiment of the smoking substitute system, processing data by the mobile device may comprise decryption of encrypted data by the mobile device, and/or processing data by the application server may comprise decryption of encrypted data by the application server.

According to a further preferred embodiment of the smoking substitute system, the first data may be decryptable by the application server, and/or the second data may be decryptable by the mobile device.

According to a further preferred embodiment of the present invention, the method may comprise communicating with the application server via a network, may transmit at least part of the first data to the application server and for processing by the application server, and in particular may transmit at least part of the processed data to the mobile device.

According to a further preferred embodiment of the present invention, the method the first data may be decrypted by the application server, and/or the second data may be decrypted by the mobile device.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4** is a flowchart diagram of a method of communicating of a smoking substitute device and a mobile device.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

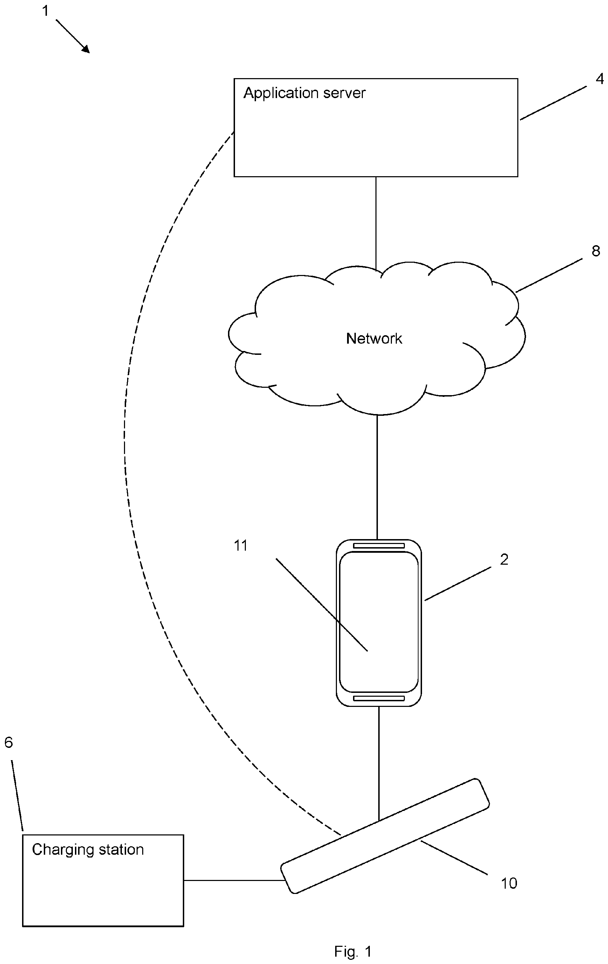

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

In other examples, the smoking substitute device 10 may be configured to communicate with the application server 4 via a connection that does not involve the mobile device 2, e.g. via a narrowband internet of things ("NB-loT") connection. In some examples, the mobile device 2 may be omitted from the system.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

Fig. 1 also shows the communication setup according to an embodiment of the present invention. The smoking substitute device 10 is communicatively connected to mobile device 2, as depicted by the line between the two devices. Mobile device 2 in turn is further communicatively connected to the application server 4, via a network 8, as depicted by the two lines between the mobile device 2, the network 8 and the application server 4. Thereby, a connection between the smoking substitute device 10 and the application server 4 may be established, as depicted by the dashed, bent line drawn between the smoking substitute device 10 and the application server 4.

Data originating from the smoking substitute device 10 to the mobile device may comprise first data (encrypted data) or second data (non-encrypted data or differently encrypted data), or both. Second data may be used by the mobile device 2, e.g. may be displayed on screen 11 of the mobile device, in particular may be displayed substantially immediately, further in particular at least may be displayed without requiring further substantive processing. In addition to the second data, the mobile device 2 may receive first data, in particular data encrypted by the smoking substitute device 10. Such first data/encrypted data may then be forwarded to the application server 4, for decryption and/or storage, and in particular for further processing, e.g. analysis. The processed or analysed data may subsequently be stored on the application server 4 and/or may be transmitted back to the mobile device 2 for display on the screen 11.

The data transmitted from the smoking substitute device 10 and received by the mobile device 2 may be both first data (encrypted data) and second data (non-encrypted or differently encrypted data). The second data may constitute at least a part or all of the first data. In other words, it may be conceivable that the smoking substitute device sends at least partly similar or identical data, in encrypted form and in non-encrypted/differently encrypted form, to the mobile device 2. The mobile device 2 may thus use the non-encrypted/ differently encrypted data stream itself, while transmitting the encrypted data stream to the application server 4 via network 8. Thus, data redundancy may be provided. The similar or identical data, in encrypted form and in non-encrypted/ differently encrypted form, may not necessarily be sent at the same time, but can be sent with a defined time difference. E.g. non-encrypted/ differently encrypted data is sent by the smoking substitute device 10 to the mobile device 2 at a first time, while the data is collected and only subsequently, at a further point in time, e.g. when sufficient data has been collected, is encrypted and sent as encrypted data to the mobile device 2 for transmitting on to the application server 4.

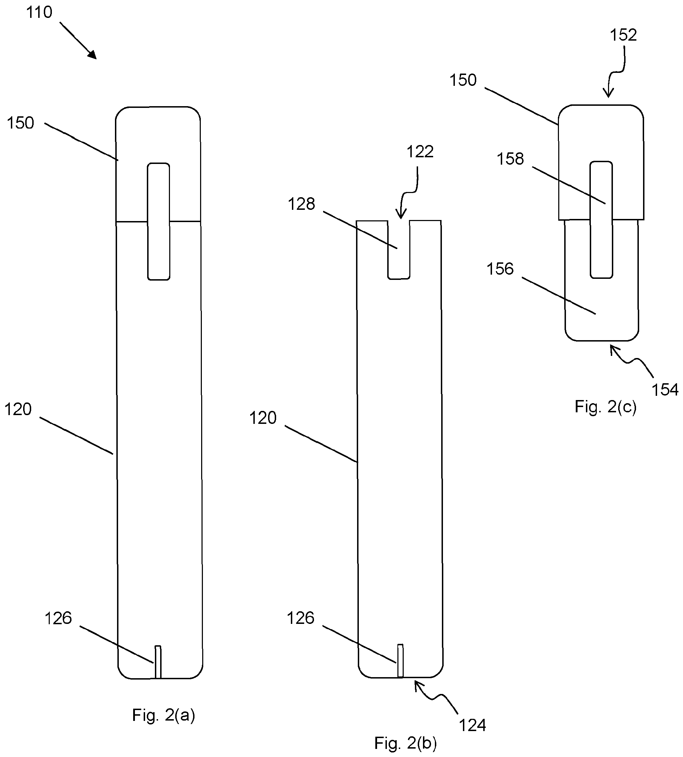

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

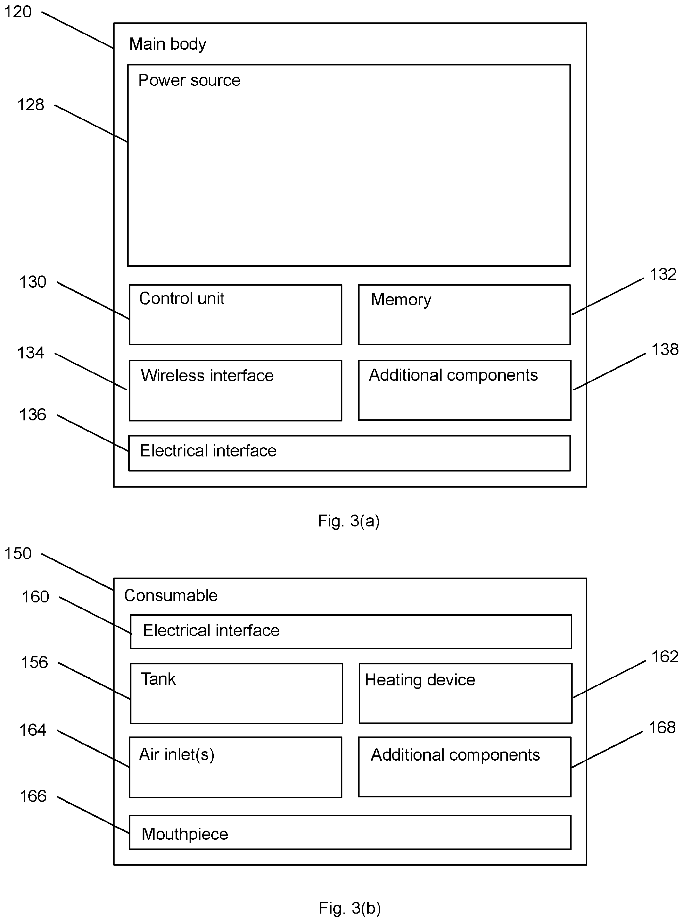

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical supply contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reading device configured to read information associated with the consumable from a machine readable data source included in (e.g. contained in the body of, or attached to) the consumable 150.

In some examples, the reading device (if present) may be configured to read information from the machine readable data source non-wirelessly, e.g. using an electrical connection between the main body 120 and consumable 150.

For example, the reading device (if present) may include a set of one or more electrical communication contacts configured to read information from the machine readable data source via an electrical connection established between the set of one or more electrical communication contacts and the machine readable data source. Conveniently, the set of one or more electrical communication contacts of the reading device may be configured to provide the electrical connection by engaging with a set of one or more electrical communication contacts of the consumable 150, when the main body 120 and the consumable 150 are physically coupled together.

In some examples, the reading device (if present) may be configured to read information from the machine readable data source wirelessly, e.g. via electromagnetic waves or optically. Thus, for example, the machine readable data source included in the consumable 150 could be an RFID tag (in which case the reading device included in the main body 120 may be an RFID reader) or a visual data source such as a barcode (in which case the reading device included in the main body may be an optical reader, e.g. a barcode scanner). Various wireless technologies and protocols may be employed to allow the reading device to wirelessly read information from a machine readable data source included in or attached to the consumable 150, e.g. NFC, Bluetooth, Wi-Fi, as would be appreciated by a skilled person.

The reading device (if present) may be configured to write information associated with the consumable to the machine readable data source (e.g. wirelessly or non-wirelessly, via one of the mechanisms discussed above) in addition to being configured to read information associated with the consumable from the machine readable data source. In this case, the reading device may be referred to as a reading/writing device.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical supply contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reading device configured to read information associated with the consumable from the machine readable data source.

For example, the electrical interface 160 of the consumable 150 may include a set of one or more electrical communication contacts, which may allow a reading device of the main body to read information from a machine readable data source of the consumable, e.g. as discussed previously.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

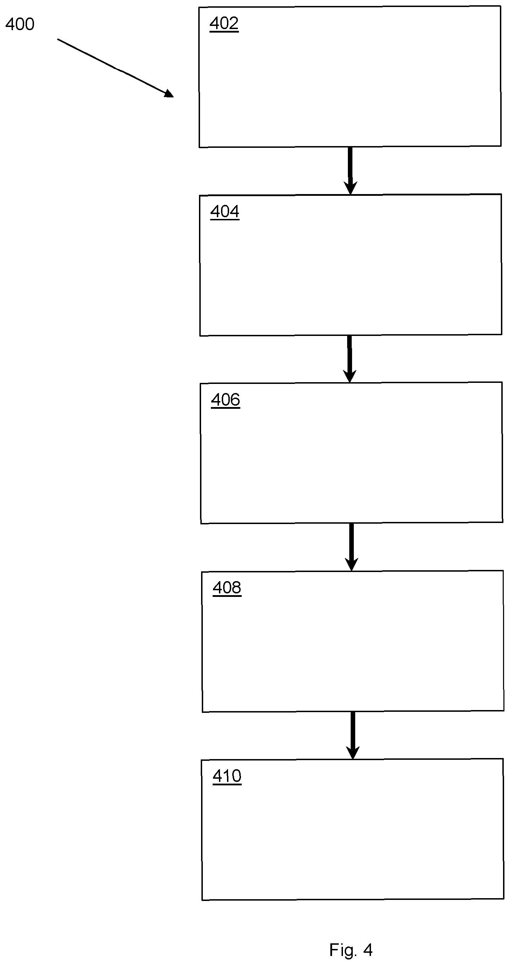

Now referring to figure 4, where a flowchart diagram of a method of communicating of a smoking substitute device and a mobile device is depicted.

Depicted is a method 400 of communicating of a smoking substitute device 10,110 and a mobile device 2, wherein the smoking substitute device is adapted to be connectable to the mobile device for communicating with the mobile device, comprising transmitting 402 first data, being of a first data type, from the smoking substitute device to the mobile device and transmitting 404 second data, being of a second data type different from the first data type, to the mobile device, wherein one of the first data and second data is encrypted data, and wherein the other one of the first data and second data is non-encrypted data. The method may further comprise communicating 406 with the application server via a network 8, transmitting 408 at least part of the encrypted data to the application server and for processing by the application server, and transmitting 410 at least part of the processed data to the mobile device.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A smoking substitute device (10,110), comprising
a wireless interface (134),
wherein the wireless interface is adapted to be connectable to a mobile device (2) for communicating with the mobile device;
wherein the smoking substitute device is adapted to transmit first data to the mobile device;
wherein the smoking substitute device is adapted to transmit second data to the mobile device;
wherein the first data comprises encrypted data; and
wherein the second data comprises at least one of non-encrypted data, and encrypted data that is encrypted differently than the first data.

2. The smoking substitute device according to the preceding claim,
wherein the first data is non-real time data; and
wherein the second data is real time data.

3. The smoking substitute device according to at least one of the preceding claims,
wherein the mobile device is adapted to be connectable to an application server (4) for communicating with the application server via a network (8);
wherein at least part of the first data is transmitted to the application server and is processed by the application server; in particular
wherein at least part of the processed data is transmitted to the mobile device.

4. The smoking substitute device according to the preceding claim,
wherein the smoking substitute device is adapted to communicate with the application server via the mobile device, in particular adapted to directly communicate with the application server via the mobile device.

5. The smoking substitute device according to at least one of the preceding claims,
wherein the first data is of a first data type; and
wherein the second data is at least partly of a second data type different from the first data type.

6. The smoking substitute device according to at least one of the preceding claims,
wherein the first data and the second data is of a data type of the group consisting of status data, usage data, consumption data, error data, puff count data, nicotine consumption data, pod count data, fill level data of a consumable, power source level data, lock status data, consumable supply data, sensor data, device identification data and user identification data.

7. The smoking substitute device according to at least one of the preceding claims,
wherein at least part of the second data is processed by the mobile device, in particular at least one of status data, usage data, consumption data, error data, puff count data, pod count data, fill level data of a consumable, power source level data and lock status data, further in particular power source level data and puff count data.

8. The smoking substitute device according to at least one of the preceding claims,
wherein processing data by the mobile device comprises decryption of encrypted data by the mobile device, and/or
wherein processing data by the application server comprises decryption of encrypted data by the application server.

9. A smoking substitute system (1), comprising
a smoking substitute device (10,110) according to at least one of the preceding claims, and
a mobile device (2) in communicative connection with the smoking substitute device, and in particular
an application server (4) in communicative connection with the mobile device via a network (8).

10. The smoking substitute system according to the preceding claim,
wherein the mobile device is adapted to be connectable to an application server (4) for communicating with the application server via a network (8);
wherein at least part of the first data is transmitted to the application server and is processed by the application server; and
wherein at least part of the second data is processed by the mobile device.

11. The smoking substitute system according to at least one of the preceding claims,
wherein processing data by the mobile device comprises decryption of encrypted data by the mobile device, and/or
wherein processing data by the application server comprises decryption of encrypted data by the application server.

12. The smoking substitute system according to at least one of the preceding claims,
wherein the first data is decryptable by the application server, and/or
wherein the second data is decryptable by the mobile device.

13. A method (400) of communicating of a smoking substitute device (10,110) and a mobile device (2), wherein the smoking substitute device is adapted to be connectable to the mobile device for communicating with the mobile device, comprising
transmitting (402) first data from the smoking substitute device to the mobile device; and transmitting (404) second data to the mobile device;
wherein the first data comprises encrypted data; and
wherein the second data comprises at least one of non-encrypted data, and data that is encrypted differently to the first data.

14. The method according to the preceding claim, comprising
communicating (406) with the application server via a network (8);
transmitting (408) at least part of the first data to the application server for processing by the application server; in particular
transmitting (410) at least part of the processed data to the mobile device.

15. The method according to at least one of the preceding claims,
wherein the first data is decrypted by the application server, and/or
wherein the second data is decrypted by the mobile device.
